Europäisches Patentamt

(19) European Patent Office

Office européen des brevets

(11) Publication number: **0 038 621**
**B1**

(12) **EUROPEAN PATENT SPECIFICATION**

(45) Date of publication of patent specification: **10.07.85**

(21) Application number: **81301003.0**

(22) Date of filing: **10.03.81**

(51) Int. Cl.⁴: **H 01 T 4/10, H 01 T 1/14,
H 01 T 1/00**

(54) **Communications circuit line protector and method of making the same.**

(30) Priority: **18.04.80 US 141290**

(43) Date of publication of application:
**28.10.81 Bulletin 81/43**

(45) Publication of the grant of the patent:
**10.07.85 Bulletin 85/28**

(84) Designated Contracting States:
**GB SE**

(56) References cited:
**DE-A-2 346 173**
**US-A-4 208 694**

(73) Proprietor: **Reliance Electric Company
29325 Chagrin Blvd.
Cleveland, Ohio 44122 (US)**

(72) Inventor: **Baumbach, Bertram William
112 North Waterman Avenue
Arlington Heights Illinois (US)**

(74) Representative: **Carpenter, David et al
Marks & Clerk Alpha Tower Suffolk Street
Queensway
Birmingham B1 1TT (GB)**

Courier Press, Leamington Spa, England.

## Description

Background of the Invention

This invention relates to line protectors for telephone and like communications circuits and to methods of making such protectors. The line protectors with which the present invention is concerned are of the type known generally as central office protectors as known from US—A— 3849750 and are utilized to prevent inside plant or central office equipment from damage due to overvoltage or overcurrent faults on incoming lines.

Concerning the designated Contracting States DE, FR, GB such a line protector is proposed in EP—A—0014543 which document falls under Article 54(3) EPC and comprises a gas tube surge voltage arrester having a central axis and opposed electrodes spaced apart by a tubular insulator to define a primary arc gap, means forming a first circuit for electrically connecting one of the electrodes to ground, means forming a second circuit for electrically connecting the other electrode to a communications line, the first circuit including a tubular element surrounding said insulator, characterized by said tubular element having a skirt portion that surrounds said other electrode in spaced relation thereto to define therewith a secondary arc gap having a breakdown voltage that is greater than the breakdown voltage of the primary arc gap but less than that of the primary arc gap should the gas tube become vented.

In order to comply with modern standards of line protection, it is becoming common to design line protectors with back-up surge voltage protection as described e.g. in DE—A—2346173 having a second arc gap between one electrode and the metallic housing. Where gas tube surge voltage arresters are utilized in the protector, it is realized that occasionally a gas tube will be defective by being vented to atmosphere. Under such conditions the arc gap within the tube is usually too wide to be effective for surge voltage protection. Often the electrode gap in the gas tube is of the order of .030 to .040" (0.76 to 1.02 mm) and may have a voltage breakdown of several hundred volts when the gas tube is functioning properly. However, when the tube is vented to atmosphere the breakdown voltage may be of the order of several thousand volts. This voltage is much too high for satisfactory protection. As a result, back up air gaps external to the gas tube are being designed into the protector modules, and these air gaps are generally designed to break down in the order of 1000 volts or less. Such air gaps require a gap spacing of only a few thousandths of an inch, for example in the order of .0065" to .0075" (0.17 to 0.19 mm) for air gap between metal electrodes.

In the mass production of protector modules it is important that the secondary air gaps be accurately established, i.e. that the spacing of the electrode elements forming the secondary air gap are not too widely or too narrowly separated. Accordingly, with normal manufacturing tolerances it sometimes is a problem assuring that the secondary air gap is always within specified tolerances.

Objects and summary of the invention

An object of this invention is to provide a line protector in which the accuracy of the secondary air gap is established with considerable reliability.

A further object of this invention is to provide an improved protector module that uses a number of standard features while at the same time assuring the accuracy of the secondary air gap.

A further object of this invention is to provide a simple method of producing the line protector which assures the accuracy of the secondary air gap.

In accordance with the foregoing objects the present invention comprises a line protector for a communications circuit comprising a gas tube surge voltage arrester having a central axis and opposed electrodes spaced apart by a tubular insulator to define a primary arc gap, means forming a first circuit for electrically connecting one of the electrodes to ground, means forming a second circuit for electrically connecting the other electrode to a communications line, the first circuit including a tubular element surrounding said gas tube, said tubular element having a skirt portion that surrounds said other electrode in spaced relation thereto to define a secondary arc gap having a breakdown voltage that is greater than the breakdown voltage of the primary arc gap but less than that of the primary arc gap should the gas tube become vented, said tubular element being resilient and by its resiliency engaging said gas tube at first and second spaced regions on opposite sides of said central axis so that the gas tube and the tubular element are prevented from radial movement relative to each other to establish and maintain said secondary arc gap.

In the preferred form of the invention the tubular element is a cup-like member which is oval shaped in cross-section and the gas tube is circular in cross-section so that the first and second regions are dimetrally opposed. The insulator and the tubular element are spaced apart at opposed third and fourth regions which are intermediate the respective first and second regions.

The invention further provides a method of making a line protector for a communications circuit that includes a gas tube surge voltage arrester having opposed electrodes separated by a tubular insulator of circular cross-section to define a primary arc gap and in which a secondary arc gap outside of the gas tube is established between one of said electrodes and a resilient tubular element that surrounds the insulator and said one electrode, said method comprising forming said tubular element as a structure of circular cross-section with a skirt portion of enlarged diameter at an end thereof, applying pressure to first and second regions of said tubular element on opposite sides of its central aixs to deform said structure into an oval shape having a minimum internal diameter less than the outer diameter of the insulator, inserting said gas tube into said oval shape so that the insulator slightly expands said minimum diameter to leave said oval shape in pressure engagement with said gas tube at said first and second regions, and relatively axially positioning said gas tube and tubular element so that said skirt surrounds said one electrode with clearance therebetween to establish and maintain said secondary gap at a predetermined width by preventing relative radial movement between the tubular element and the gas tube due to said pressure engagement at said region.

Brief description of the figures

Fig. 1 is a longitudinal cross sectional view of a line protector constructed in accordance with and embodying the present invention;

Fig. 2 is a sectional view through the central axis of the tubular element which forms part of the present invention;

Fig 3 is a sectional view taken along lines 3—3 of Fig. 2;

Fig. 4 is a sectional view similar to Fig. 3 but showing the tubular element after it has been deformed into an oval shape pursuant to the method of this invention;

Fig. 5 is a fragmentary sectional view taken approximately along line 5—5 of Fig. 5; and

Fig. 6 is a fragmentary sectional view taken approximately along line 6—6 of Fig. 1.

Detailed description

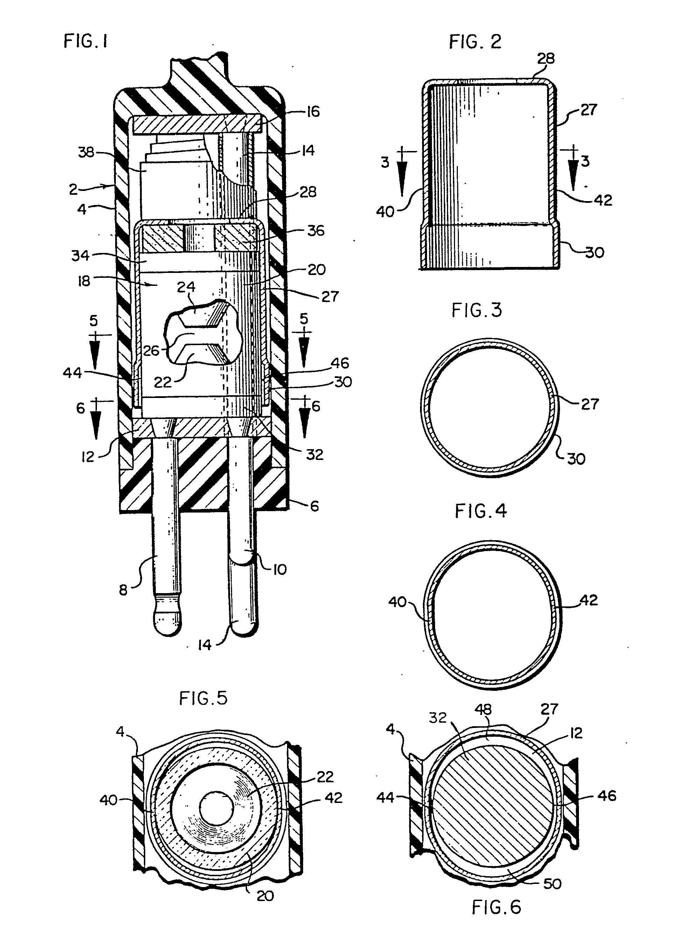

Referring now in more detail to the drawings, Fig. 1, shows a cross-sectional view of one-half of a dual line protector module. By a dual module it is meant that there is separate surge protection for each side of the line, namely for the tip side and the ring side of the line. Since both halves of the protector module are the same only one such half need be shown and described herein.

The protector module 2 comprises a plastic dielectric housing 4 that telescopes with and joins a plastic dielectric base 6 in a conventional manner. Mounted in the base 6 is a long line pin 8 to which an outside line is connected (tip or ring), and a short line pin 10 connected to the inside central office equipment. To provide conductive connection between the line pins 8, 10 the inside surface of the base 6 has a metallic plate 12 that is secured to the base 6 in any conventional manner. One such manner is through the staking of the line pins to the plate 12. The lines pins 8, 10 project through the base 6 and are adapted to be plugged into a conventional connector panel.

In addition to the line pins 8, 10 there is a ground pin 14 that also projects through the base 6 for plug-in connection to a ground terminal in the connector panel. Within the housing 4 the ground pin 14 is suitably insulated and extends to a region adjacent to the end wall of the housing for connection to a ground plate 16. This ground plate 16 as well as the ground pin 14 may be of the general configuration shown in U.S. Patent 3,849,750 that issued November 19, 1974, and to which reference may be had.

Positioned within the interior of the housing 4 is a gas tube surge voltage arrester 18 of circular cross-section having a tubular ceramic insulator 20 that separates two opposed electrodes 22, 24. The gas tube contains conventional inert gas, e.g. argon, etc. These electrodes define a primary arc gap 26 having a breakdown voltage of the order of several hundred volts, and the gap 26 may be in the order of 0.030 to 0.040 inches (0.76—1.02 mm) in width. The gas tube arrester 18 is received within a metallic tubular element 27 having a perforated end wall 28 and an outwardly flared skirt portion 30 of enlarged diameter. As will be described hereafter, the skirt 30 is in close proximity with the rim 32 of the electrode 22, and the rim 32 and the skirt 30 define a secondary or back up arc gap that is intended to provide overvoltage protection for the line in the event that the inert gas in the tube 18 becomes vented to atmosphere. The electrode rim 32 engages the metal plate 12 to form a circuit for electrically connecting the electrode 22 to the line pins 8, 10.

Interposed between the rim 34 of the electrode and the end wall 28 is a perforated solder element in the form of a disc 36. Interposed between the ground plate 16 and the end wall 28 is a volute spring 38 of known construction. There is thus provided a direct metallic path from the electrode 24 to the ground pin 14 through the tubular element 27, the volute spring 38 and the ground plate 16. Normal overvoltage protection is provided by a discharge across the gap 26 to ground when an overvoltage surge appears at either line pin 8, 10. If the gas tube becomes overheated due to an excessive arcing across gap 26 and resultant current flow from the line pins to ground pin 14, the solder element 36 will melt causing the volute spring 38 to move the tubular element 27 and its skirt 30 into the engagement with the metal plate 12, thereby grounding the line.

An important feature of this invention is the provision of accurately and consistently establishing the magnitude of a secondary arc gap between the electrode rim 32 and the skirt 30. By way of example but not of limitation, the secondary or back up arc gap between the rim 32 and the skirt 30 should be from about 0.0065 inches to about 0.0075 inches (0.17 to 0.19 mm) (nominal gap 0.007 inches (0.18 mm) resulting in an arc gap with a breakdown voltage of about 1000 volts.

Initially the tubular element 27 is drawn from sheet metal stock to the shape shown in Figs. 2 and 3, namely wherein the tubular element 27 is of circular cross-section with the flared out skirt 30. The internal diameter of the tubular element axially between the skirt 30 and the end wall 34 is slightly larger than the external diameter of the gas tube 18. After forming the tubular element 27 and before applying the conventional plating thereto, a secondary forming operation is performed to change the cross-section of the tubular element 27 to the elliptical configuration shown in Fig. 4. For this purpose inward radial pressure is applied by a blunt forming tool to first and second regions 40 and 42 that are diametrally opposed, namely on opposite sides of the central axis of the tubular element 27 and spaced from the skirt 30. This deforming operation reshapes the tubular element into an elliptical shape by cold working the resilient tubular element 27 beyond its elastic limits, but while still retaining resiliency in the regions 40, 42. The minor diameter of the ellipse across the portions 40, 42 axially intermediate the skirt 30 and the end wall 34 is smaller than the external diameter of the gas tube 18. Consequently, when the gas tube is inserted telescopically within the tubular element 27, the oval shape of the elliptical form expands slightly to leave the oval shape in resilient pressure engagement with the gas tube in the regions 40, 42. By this positive contact between the tubular element 27 and the gas tube, two opposed gaps 44, 46 (Fig. 6) are established at the diametrally opposed narrower regions between the skirt 30 and the electrode rim 32. Regions of clearance 48, 50 between the gas tube 18 and the tubular element 27 are across the major diameter of the ellipse. These arc gaps 44, 46 are, therefore, axially in line with the regions 40, 42. The secondary or back up gap of a nominal 0.007 inches (0.18 mm) will be at one or both of the gaps 44, 46. Either gap 44, 46 may be the place of discharge.

**Claims for the Contracting State: GB**

1. A line protector for a communications circuit comprising a gas tube surge voltage arrester having a central axis and opposed electrodes spaced apart by a tubular insulator (20) to define a primary arc gap (26), means (27, 38, 16, 14) forming a first circuit for electrically connecting one of the electrodes (24) to ground, means forming a second circuit for electrically connecting the other electrode (22) to a communications line, the first circuit including a tubular element (27) surrounding said insulator, said tubular element having a skirt portion (30) that surrounds said other electrode (22) in spaced relation thereto to define therewith a secondary arc gap (44, 46) having a breakdown voltage that is greater than the breakdown voltage of the primary arc gap but less than that of the primary arc gap (26) should the gas tube (18) become vented, said tubular element being resilient and by its resiliency engaging said gas tube at first and second spaced regions (40, 42) on opposite sides of said central axis so that the gas tube and the tubular element are prevented from radial movement relative to each other to establish and maintain said secondary arc gap.

2. A line protector according to claim 1 in which said tubular element is oval shaped in cross-section and said gas tube is circular in cross-section whereby the gas tube and tubular element are spaced at opposite third and fourth regions (48, 50).

3. A line protector according to claim 1 or claim 2 in which said skirt portion is oval shaped in cross-section so that said secondary arc gap (44, 46) is at a minimum spacing between said skirt portion (30) and said other electrode (22).

4. A method of making a line protector according to claim 1, said method being characterized by forming said tubular element (27) as a structure of circular cross-section with a skirt portion (30) of enlarged diameter at an end thereof, applying pressure to first and second regions (40, 42) of said tubular element on opposite sides of its central axis to deform said structure into an oval shape having a minimum internal diameter less than the outer diameter of the gas tube, inserting said gas tube into said oval shape so that the gas tube slightly expands said minimum diameter to leave said oval shape in pressure engagement with said gas tube at said first and second regions, and relatively axially positioning said gas tube and tubular element so that said skirt (30) surrounds said one electrode (22) with clearance therebetween to establish and maintain said secondary gap at a predetermined width by preventing relative radial movement between the tubular element and the gas tube due to said pressure engagements at said regions.

5. A method according to claim 4 in which said first and second regions (40, 42) are substantially at opposite ends of a diameter through said circular cross-section and said regions are axially spaced from said skirt portion.

6. A method according to claim 4 in which the formed oval shape is such as to produce clearance at opposed third and forth regions (48, 50).

**Claims for the Contracting State: SE**

1. A line protector for a communications circuit comprising a gas tube surge voltage arrester having a central axis and opposed electrodes spaced apart by a tubular insulator (20) to define a primary arc gap (26), means (27, 38, 16, 14) forming a first circuit for electrically connecting one of the electrodes (24) to ground, means forming a second circuit for electrically connecting the other electrode (22) to a communications line, the first circuit including a tubular element (27) surrounding said insulator, characterized by said tubular element having a skirt portion (30) that surrounds said other electrode (22) in spaced relation thereto to define therewith a secondary arc gap (44, 46) having a breakdown voltage that is greater than the breakdown voltage of the primary arc gap but less than that of the primary arc gap (26) should the gas tube (18) become vented, said tubular element being resilient and by its resiliency engaging said gas tube at first and second spaced regions (40, 42) on opposite sides of said central axis so that the gas tube and the tubuar element are prevented from radial movement relative to each other to establish and maintain said secondary arc gap.

2. A line protector according to claim 1 in which said tubular element is oval shaped in cross-section and said gas tube is circular in cross-section whereby the gas tube and tubular element are spaced at opposite third and fourth regions (48, 50).

3. A line protector according to claim 1 or claim 2 in which said skirt portion is oval shaped in cross-section so that said secondary arc gap (44, 46) is at a minimum spacing between said skirt portion (30) and said other electrode (22).

4. A method of making a line protector according to claim 1, said method being characterized by forming said tubular element (27) as a structure of circular cross-section with a skirt portion (30) of enlarged diameter at an end thereof, applying pressure to first and second regions (40, 42) of said tubular element on opposite sides of its central axis to deform said structure into an oval shape having a minimum internal diameter less than the outer diameter of the gas tube, inserting said gas tube into said oval shape so that the gas tube slightly expands said minimum diameter to leave said oval shape in pressure engagement with said gas tube at said first and second regions, and relatively axially positioning said gas tube and tubular element so that said skirt (30) surrounds said one electrode (22) with clearance therebetween to establish and maintain said secondary gap at a predetermined width by preventing relative radial movement between the tubular element and the gas tube due to said pressure engagements at said regions.

5. A method according to claim 4 in which said first and second regions (40, 42) are substantially at opposite ends of a diameter through said circular cross-section and said regions are axially spaced from said skirt portion.

6. A method according to claim 4 in which the formed oval shape is such as to produce clearance at opposed third and fourth regions (48, 50).

**Patentansprüche für den Vertragsstaat: GB**

1. Schutzeinrichtung für die Fernmeldeleitung einer Fernmeldeschaltung, mit einem Gasrohr-Überspannungsableiter, mit einer Mittelachse und mit durch einen rohrförmigen Isolator (20) beabstandeten, einander gegenüberliegenden, eine primäre Lichtbogenstrecke bildenden Elektroden, mit Einrichtungen (27, 38, 16, 14), die einen ersten elektrischen Kreis bilden und eine der Elektroden (24) elektrisch mit Masse verbinden, mit Einrichtungen, die einen zweiten elektrischen Kreis bilden und die andere Elektrode (22) mit der Fernmeldeleitung verbinden, wobei der erste Kreis ein den Isolator umgebendes rohrförmiges Element (27), und das rohrförmige Element einen Randbereich (30) aufweist, der die andere Elektrode (22) beabstandet umgibt und mit dieser eine sekundäre Lichtbogenstrecke (44, 46) mit einer Durchbruchsspannung bildet, die größer als die der primären Lichtbogenstreck ist, die jedoch, falls Luft in das Gasrohr (18) eintritt, kleiner als die Durchbruchsspannung der primären Lichtbogenstrecke (26) ist, wobei das rohrförmige Element elastisch ist und aufgrund seiner Elastizität das Gasrohr an ersten und zweiten beabstandeten Bereichen (40, 42) auf gegenüberliegenden Seiten der Mittelachse berührt, so daß das Gasrohr und das rohrförmige Element relativ zueinander keine radiale Bewegung ausführen können und die sekundäre Lichtbogenstrecke bestehen bleibt.

2. Schutzeinrichtung nach Anspruch 1, dadurch gekennzeichnet, daß das rohrförmige Element einen ovalen Querschnitt und das Gasrohr einen kreisförmigen Querschnitt aufweist, wodurch das Gasrohr und das rohrförmige Element in gegenüberliegenden dritten und vierten Bereichen (48, 50) voneinander beabstandet sind.

3. Schutzeinrichtung nach Anspruch 1 oder Anspruch 2, dadurch gekennzeichnet, daß der Randbereich ovalen Querschnitt besitzt, so daß die sekundäre Lichtbogenstrecke (44, 46) beim minimalen Abstand zwischen dem Randbereich (30) und der anderen Elektrode (22) liegt.

4. Verfahren zum Herstellen einer Schutzeinrichtung nach Anspruch 1, dadurch gekennzeichnet, daß das rohrförmige Element (27) als eine Struktur mit kreisförmigem Querschnitt und an einem Ende einem Randbereich (30) von erweitertem Durchmesser ausgebildet wird, daß auf erste und zweite Bereich (40, 42) des rohrförmigen Elements auf gegenüberliegenden Seiten der Mittelachse Druck ausgeübt wird, um der Struktur eine ovale Form mit einem kleinsten inneren Durchmesser zu geben, der geringer als der äußere Durchmesser des Gasrohrs ist, daß das Gasrohr in die ovale Form eingesetzt wird, so daß das Gasrohr den kleinsten Durchmesser geringfügig erweitert und die ovale Form an dem ersten und zweiten Bereich des Gasrohrs mit Andruck anliegt, und daß das Gasrohr und das rohrförmige Element relativ axial so angeordnet werden, daß der Randbereich (30) die eine Elektrode (22) mit einem Zwischenraum so umgibt, daß die sekundäre Lichtbogenstrecke durch Verhinderung relativer Radialbewegung zwischen dem rohrförmigen Element und dem Gasrohr aufgrund des Andrucks in den bestimmten Bereichen auf eine vorbestimmte Länge eingestellt und festgehalten wird.

5. Verfahren nach Anspruch 4, dadurch gekennzeichnet, daß die ersten und zweiten Bereich (40, 42) sich im wesentlichen an gegenüberliegenden Enden eines Durchmessers durch den kreisförmigen Querschnitt befinden und die Bereiche axial von dem Randbereich (30) beabstandet sind.

6. Verfahren nach Anspruch 4, dadurch gekennzeichnet, daß die gebildete ovale Form einen Zwischenraum an gegenüberliegenden dritten und vierten Bereichen (48, 50) erzeugt.

**Patantansprüche für den Vertragsstaat: SE**

1. Schutzeinrichtung für die Fernmeldeleitung einer Fernmeldeschaltung, mit einem Gasrohr-Überspannungsableiter, mit einer Mittelachse und mit durch einen rohrförmigen Isolator (20) beabstandeten, einander gegenüberliegenden, eine primäre Lichtbogenstrecke bildenden Elektroden, mit Einrichtungen (27, 38, 16, 14), die einen ersten elektrischen Kreis bilden und eine der Elektroden (24) elektrisch mit Masse verbinden, mit Einrichtungen, die einen zweiten elektrischen Kreis bilden und die andere Elektrode (22) mit der Fernmeldeleitung verbinden, wobei der erste Kreis ein den Isolator umgebendes rohrförmiges Element (27) aufweist, dadurch gekennzeichnet, daß das rohrförmige Element einen Randbereich (30) aufweist, der die andere Elektrode (22) beabstandet umgibt und mit dieser eine sekundäre Lichtbogenstrecke (44, 46) mit einer Durchbruchsspannung bildet, die größer als die der primären Lichtbogenstrecke ist, die jedoch, falls Luft in das Gasrohr (18) eintritt, kleiner als die Durchbruchsspannung der primären Lichtbogenstrecke (26) ist, und daß das rohrförmige Element elastisch ist und aufgrund seiner Elastizität das Gasrohr an ersten und zweiten beabstandeten Bereichen (40, 42) auf gegenüberliegenden Seiten der Mittelachse berührt, so daß das Gasrohr und das rohrförmige Element relativ zueinander keine radiale Bewegung ausführen können und die sekundäre Lichtbogenstrecke bestehen bleibt.

2. Schutzeinrichtung nach Anspruch 1, dadurch gekennzeichnet, daß das rohrförmige Element einen ovalen Querschnitt und das Gasrohr einen kreisförmigen Querschnitt aufweist, wodurch das Gasrohr und das rohrförmige Element in gegenüberliegenden dritten und vierten Bereichen (48, 50) voneinander beabstandet sind.

3. Schutzeinrichtung nach Aspruch 1 oder Anspruch 2, dadurch gekennzeichnet, daß der Randbereich ovalen Querschnitt besitzt, so daß die sekundäre Lichtbogenstrecke (44, 46) beim minimalen Abstand zwischen dem Randbereich (30) und der anderen Elektrode (22) liegt.

4. Verfahren zum Herstellen einer Schutzeinrichtung nach Anspruch 1, dadurch gekennzeichnet, daß das rohrförmige Element (27) als eine Struktur mit kreisförmigem Querschnitt und an einem Ende einem Randbereich (30) von erweitertem Durchmesser ausgebildet wird, daß auf erste und zweite Bereich (40, 42) des rohrförmigen Elements auf gegenüberliegenden Seiten der Mittelachse Druck ausgeübt wird, um der Struktur eine oval Form mit einem kleinsten inneren Durchmesser zu geben, der geringer als der äußere Durchmesser des Gasrohrs ist, daß das Gasrohr in die ovale Form eingesetzt wird, so daß das Gasrohr den kleinsten Durchmesser geringfügig erweitert und die ovale Form an dem ersten und zweiten Beriech des Gasrohrs mit Andruck anliegt, und daß das Gasrohr und das rohrförmige Element relativ axial so angeordnet werden, daß der Randbereich (30) die eine Elektrode (22) mit einem Zwischenraum so umgibt, daß die sekundäre Lichtbogenstrecke durch Verhinderung relativer Radialbewegung zwischen dem rohrförmigen Element und dem Gasrohr aufgrund des Andrucks in den bestimmten Bereichen auf eine vorbestimmte Länge eingestellt und festgehalten wird.

5. Verfahren nach Anspruch 4, dadurch gekennzeichnet, daß die ersten und zweiten Bereiche (40, 42) sich im wesentlichen an gegenüberliegenden Enden eines Durchmessers durch den kreisförmigen Querschnitt befinden und die Bereiche axial von dem Randbereich (30) beabstandet sind.

6. Verfahren nach Anspruch 4, dadurch gekennzeichnet, daß die gebildete ovale Form einen Zwischenraum an gegenüberliegenden dritten und vierten Bereichen (48, 50) erzeugt.

**Revendications pour l'Etat Contractant: GB**

1. Protecteur de ligne pour un circuit de transmission comprenant un parafoudre à tube à gaz ayant un axe central et des électrodes en vis-à-vis espacées l'une de l'autre par un isolateur tubulaire (20) pour définir un éclateur primaire (26), des moyens (27, 38, 16, 14) formant un premier circuit pour connecteur électriquement une première (24) des électrodes à la terre, des moyens formant un second circuit pour connecter électriquement l'autre électrode (22) à une ligne de transmission, le premier circuit comprenant un élément tubulaire qui entoure ledit isolateur, ledit élément tubulaire comportant une partie de jupe (30) qui entoure ladite autre électrode (22) dans une disposition relative espacée de cette dernière pour définir avec elle un éclateur secondaire (44, 46) dont la tension de claquage est supérieure à la tension de claquage de l'éclateur primaire mais inférieure à celle de l'éclateur primaire (26) dans le cas où le tube (18) à gaz est mis à l'atmosphère, ledit élément tubulaire étant élastique et, du fait de son élasticité, venant en appui contre ledit tube à gaz dans des première et seconde régions espacées (40, 42) sur des côtés opposés dudit axe central de sorte que le tube à gaz et l'élément tubulaire sont empêchés d'effectuer un quelconque mouvement radial l'un par rapport à l'autre afin d'établir et de maintenir ledit éclateur secondaire.

2. Un protecteur de ligne selon la revendication 1, dans lequel ledit élément tubulaire a une forme ovale en section transversale et ledit tube à gaz a une section transversale circulaire de sorte que le tube à gaz et l'élément tubulaire sont espacés l'un de l'autre dans des troisième et quatrième régions opposées (48, 50).

3. Protecteur de ligne selon la revendication 1 ou 1a revendication 2, dans lequel ladite partie de jupe a une forme ovale en section transversale de sorte que l'éclateur secondaire (44, 46) est situé à l'espacement minimal entre ladite partie de jupe (30) et ladite autre électrode (22).

4. Procédé de fabrication d'un protecteur de ligne selon la revendication 1, ledit procédé étant caractérisé en ce qu'il consiste à former ledit élément tubulaire (27) sous forme d'une structure à section transversale circulaire munie d'une partie du jupe (30) de plus grand diamètre à une de ses extrémités, à appliquer une pression à des première et seconde régions (40, 42) dudit élément tubulaire sur des côtés opposés de son axe central pour déformer ladite structure à une forme ovale ayant un diamètre interne minimal inférieur au diamètre extérieur du tube à gaz, à introduire ledit tube à gaz dans ladite forme ovale de façon que ledit tube à gaz agrandisse légèrement ledit diamètre minimal pour laisser ladite forme ovale en contact sous pression avec ledit tube à gaz dans lesdites première et seconde régions et à positionner axialement relativement ledit tube à gaz et ledit élément tubulaire de façon que ladite jupe (30) entoure ladite première électrode (22) avec un espace libre entre elles pour établir et maintenir ledit éclateur secondaire à une largeur prédéterminée en empêchant tout mouvement radial relatif entre l'élément tubulaire et le tube à gaz du fait desdits contacts sous pression dans lesdites régions.

5. Procédé selon la revendication 4 dans lequel lesdites première et seconde régions (40, 42) sont situées approximativement aux extrémités opposées d'un diamètre de ladite section transversale circulaire et lesdites régions sont axialement espacées de ladite partie du jupe.

6. Procédé selon la revendication 4, dans lequel la forme ovale produite est telle qu'elle produit un espace libre dans des troisième et quatrième régions opposées (48, 50).


**Revendications pour l'Etat Contractant: SE**

1. Protecteur de ligne pour un circuit de transmission comprenant un parafoudre à tube à gaz ayant un axe central et des électrodes en vis à vis espacées l'une de l'autre par un isolateur tubulaire (2) pour définir un éclateur primaire (26), des moyens (27, 38, 16, 14) formant un premier circuit pour connecter électriquement une première (24) des électrodes à la terre, des moyens formant un second circuit pour connecter électriquement l'autre électrode (22) à une ligne de transmission, le premier circuit comprenant un élément tubulaire qui entoure ledit isolateur, caractérisé par le fait que ledit élément tubulaire comporte une partie de jupe (30) qui entoure ladite autre électrode (22) dans un disposition relative espacée de cette dernière pour définir avec elle un éclateur secondaire (44, 46) dont la tension de claquage est supérieure à la tension de claquage de l'éclateur primaire mais inférieure à celle de l'éclateur primaire (26) dans le cas où le tube (18) à gaz est mis à l'atmosphère, ledit élément tubulaire étant élastique et, du fait de son élasticité, venant en appui contre ledit tube à gaz dans des première et seconde régions espacées (40, 42) situées sur des côtés opposés dudit axe central, de sorte que le tube à gaz et l'élément tubulaire sont empêchés d'effectuer un quelconque mouvement radial l'un par rapport à l'autre afin d'établir et de maintenir ledit éclateur secondaire.

2. Protecteur de ligne selon la revendication 1, dans lequel ledit élément tubulaire a une forme ovale en section transversale et ledit tube à gaz a une section transversale circulaire de sorte que le tube à gaz et l'élément tubulaire sont espacés l'un de l'autre dans des troisième et quatrième régions opposées (48, 50).

3. Protecteur de ligne selon la revendication 2, dans lequel ladite partie de jupe a une forme ovale en section transversale de sorte que l'éclateur secondaire (44, 46) est situé à l'espacement minimal entre ladite partie de jupe (30) et ladite autre électrode (22).

4. Procédé de fabrication d'un protecteur de ligne selon la revendication 1, ledit procédé étant caractérisé en ce qu'il consiste à former ledit élément tubulaire (37) sous forme d'une structure à section transversale circulaire munie d'une partie de jupe (30) de plus grand diamètre à une de ses extrémités, à appliquer une pression à des première et seconde régions (40, 42) dudit élément tubulaire sur des côtés opposés de son axe central pour déformer ladite structure à une forme ovale ayant un diamètre interne minimal inférieur au diamètre extérieur du tube à gaz, à introduire ledit tube à gaz dans ladite forme ovale de façon que ledit tube à gaz agrandisse légèrement ledit diamètre minimal pour laisser ladite forme ovale en contact sous pression avec ledit tube à gaz dans lesdites première et seconde régions et à positionner axialement relativement ledit tube à gaz et ledit élément tubulaire de façon que ladite jupe (30) entoure ladite première électrode (22) avec un espace libre entre elles pour établir et maintenir ledit éclateur secondaire à une largeur prédéterminée en empêchant tout mouvement radial relatif entre l'élément tubulaire et le tube à gaz du fait desdits contacts sous pression dans lesdites régions.

5. Procédé selon la revendication 4, dans lequel lesdites première et seconde régions (40, 42) sont situées approximativement aux extrémités opposées d'un diamètre de ladite section transversale circulaire et lesdites régions sont axialement espacées de ladite partie de jupe.

6. Procédé selon la revendication 4, dans lequel la forme ovale produite est telle qu'elle produit un espace libre dans des troisième et quatrième régions opposées (48, 50).

FIG.1

FIG. 2

FIG.3

FIG.4

FIG.5

FIG.6